# EUROPEAN PATENT SPECIFICATION

(11) **EP 2 636 861 B1**
(45) Date of publication and mention of the grant of the patent: **16.01.2019**
(21) Application number: 11837808.2
(22) Date of filing: 09.09.2011
(51) Int. Cl.: F01N 3/30, F01N 13/10, F01N 3/20

(54) **EXHAUST GAS EMISSION PURIFICATION DEVICE**
VORRICHTUNG ZUR REINIGUNG VON ABGASEMISSIONEN
DISPOSITIF D'ÉPURATION DES ÉMISSIONS DES GAZ D'ÉCHAPPEMENT

(30) Priority: 02.11.2010 JP 2010246335
(43) Date of publication of application: 11.09.2013
(73) Proprietor: Hitachi Zosen Corporation, Osaka-shi, Osaka 559-8559 (JP)
(72) Inventor: BABA, Shinji, Osaka-shi Osaka 559-8559 (JP)
(74) Representative: Hoffmann Eitle
(86) International application number: PCT/JP2011/070612
(87) International publication number: WO 2012/060155

(56) References cited:
- EP-A1- 0 468 919
- EP-A1- 1 321 641
- DE-A1-102007 026 744
- JP-A- 4 232 324
- JP-A- 6 050 133
- JP-A- 8 014 033
- JP-A- H0 650 133
- JP-A- 10 054 251
- JP-A- H09 504 349

## Description

### TECHNICAL FIELD

The present invention relates to an exhaust gas emission purification device which provides a purification mechanism within an exhaust manifold whereby a nitrogen oxide (NOx) in an exhaust gas emission is caused to react with a reducing agent in the presence of a denitration catalyst.

### BACKGROUND ART

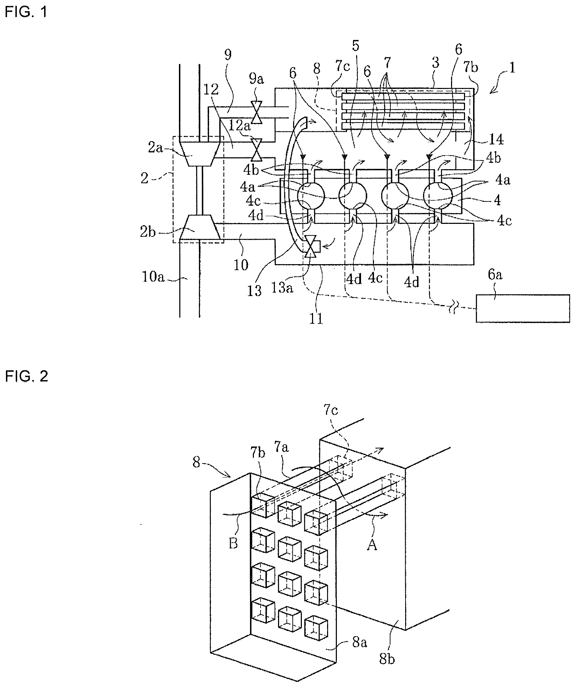

In the past, a technology was employed for detoxifying gas by providing a denitration catalyst such as an SCR (Selective Catalytic Reduction) catalyst in an exhaust pipe of a diesel engine, and providing a nozzle upstream of the denitration catalyst for spraying an aqueous solution of a reducing agent composition containing high-concentration urea and low-concentration ammonia into an exhaust gas so as to break down NOx in an exhaust gas into nitrogen and water by bringing the exhaust gas containing the gasified reducing agent into contact with the denitration catalyst (e.g., see FIG. 1 of Patent Reference 1).

When the aforementioned technology was used in a diesel engine equipped with a turbocharger, in some cases the denitration catalyst was provided downstream of the turbocharger, and in other cases, it was provided upstream thereof.

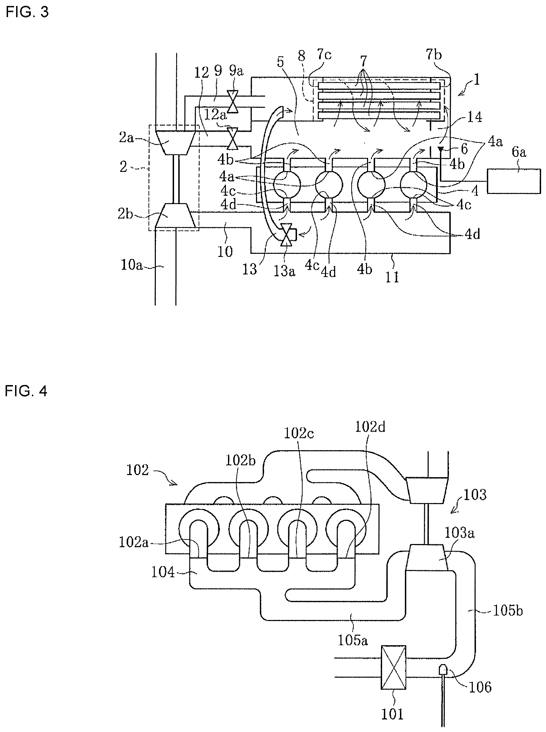

FIG. 4 illustrates a case in which an SCR catalyst 101 is provided downstream of a turbocharger 103 of a 4-cylinder diesel engine 102 for a ship, for example. Reference Numeral 104 is an exhaust manifold leading to an exhaust pipe 105a which collects exhaust gas emitted from exhaust ports 102a, 102b, 102c, and 102d. A supply nozzle 106, which sprays an aqueous solution of a reducing agent such as ammonia or a reducing agent precursor such as urea into the exhaust gas, is provided in an exhaust pipe 105b downstream of a turbine 103a of the turbocharger 103.

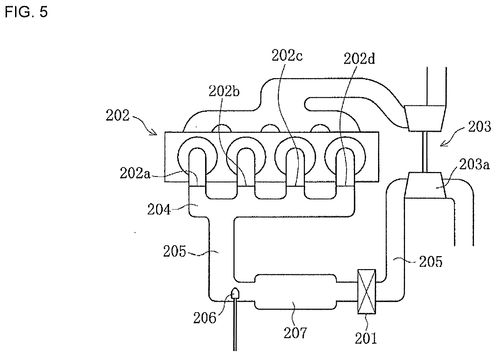

FIG. 5 illustrates a case in which a SCR catalyst 201 is provided upstream of a turbocharger 203 of a 4-cylinder diesel engine 202 for a ship, for example (e.g., see FIG. 1 of Patent Reference 2). A supply nozzle 206, which sprays an aqueous solution of a reducing agent such as ammonia or a reducing agent precursor such as urea into the exhaust gas, and an evaporation tube 207 for forming a reducing agent such as ammonia by vaporizing or hydrolyzing the aqueous solution of the reducing agent or reducing agent precursor sprayed from the nozzle 206, are provided in an exhaust pipe 205 between an exhaust manifold 204 which collects exhaust gas emitted from exhaust ports 202a, 202b, 202c, and 202d, and a turbine 203a of a turbocharger 203.

However, in a configuration in which the SCR catalyst 101 is provided downstream of the turbocharger, as shown in FIG. 4, there was a problem in that there was a decrease in catalytic performance, because the temperature of the exhaust gas decreased downstream of the turbine 103a. In detail, in the case of a diesel engine for a ship, for example, the temperature of the exhaust gas downstream of the turbine 103a can drop as low as 250°C, though the activation energy of the SCR catalyst 101 is around 350°C. In cases such as this, where the temperature difference is great, it is necessary to heat the exhaust gas by providing a reheating burner downstream of the turbine 103a, so there was a problem in that there were increased operating costs involved in igniting the burner.

Moreover, as shown in FIG. 5, in a configuration in which the SCR catalyst 201 is provided upstream of the turbocharger 203, the evaporation tube 207 with a large flow path cross-sectional area is provided in order to vaporize or hydrolyze aqueous urea or the like which is sprayed from the nozzle 206 by the shortest possible path. However, providing a path with such a large cross-sectional area as the evaporation tube 207 was a factor causing a reduction in engine performance, because it incurred a loss of pressure.
EP-A1-1 321 641 discloses an exhaust emission purification system for diesel engine, and EP-A1-0 468 919 A1 discloses a large diesel engine.

### PRIOR ART REFERENCES

### PATENT REFERENCES

Patent Reference 1: Japanese Patent Application Kokai Publication No. 2003-260331
Patent Reference 2: Japanese Patent Application Kokai Publication No. Showa 61-70115

### SUMMARY OF THE INVENTION

### PROBLEMS TO BE SOLVED BY THE INVENTION

One problem which the present invention aims to solve is that in an exhaust gas emission purification device according to the prior art, in which the denitration catalyst was provided downstream of the turbocharger, this was disadvantageous from the standpoint of catalytic performance, because of the insufficient temperature of the exhaust gas introduced into the denitration catalyst. Another problem is the increase in cost resulting from providing a reheating burner. Yet another problem is that in an exhaust gas emission purification device according to the prior art, in which the denitration catalyst was provided upstream of the turbocharger, there was a reduction in engine performance, because of the need for an evaporation tube having a large cross-sectional area.

### MEANS FOR SOLVING THESE PROBLEMS

The present invention provides an exhaust gas emission purification device according to the independent claim 1. Optional features are recited in the dependent claims.

The exhaust gas emission purification device according to the present invention comprises, within an exhaust manifold of an engine equipped with a turbocharger, as its most essential features, an exhaust chamber which collects an exhaust gas emitted from an exhaust port of the engine, and a catalytic reactor, arranged serially within the exhaust chamber, which has a plurality of catalyst tubes with a denitration catalyst disposed therein for breaking down NOx in the exhaust gas by bringing the exhaust gas into contact with the denitration catalyst. The exhaust gas emission purification device according to the present invention also comprises a nozzle capable of spraying an aqueous solution containing a reducing agent and a reducing agent precursor, or either one of these, into the exhaust gas before it reaches the catalytic reactor.

### ADVANTAGEOUS EFFECTS OF THE INVENTION

In the present invention having the above-described construction, there is no reduction in the performance of the denitration catalyst due to an insufficient temperature of the exhaust gas, because an aqueous solution containing a reducing agent and a reducing agent precursor, or either one of these, is sprayed into a high-temperature exhaust gas immediately after being emitted from an exhaust port of an engine, so that the exhaust gas containing the gasified reducing agent is brought into contact with the denitration catalyst while still in a high-temperature state. Moreover, there is no need for a reheating burner, because the temperature of the exhaust gas does not drop below the activation temperature of the catalyst.

In addition, in the present invention having the above-described construction, in which the denitration catalyst is disposed within the exhaust manifold, the aqueous solution of the reducing agent precursor or the like which is sprayed from the nozzle, is effectively gasified or hydrolyzed within a short time within the exhaust manifold which has the greatest cross-sectional surface area in the exhaust system, because it is caused to mix with the high-temperature exhaust gas immediately after being emitted from the exhaust port of the engine. There is therefore no need for an evaporation tube which was a factor causing a reduction in engine performance.

### BRIEF DESCRIPTION OF THE DRAWINGS

FIG. 1 is a schematic drawing showing the over-all structure of the exhaust gas emission purification device according to the present invention.
FIG. 2 is a drawing illustrating an example of the catalytic reactor of the exhaust gas emission purification device according to the present invention, in a perspective view of the catalytic reactor as seen from inlet side of the catalyst pipe.
FIG. 3 is a drawing illustrating the structure of another example according to the present invention.
FIG. 4 is a drawing illustrating an exhaust gas emission purification device according to the prior art with a denitration catalyst provided on the downstream side of the turbocharger.
FIG. 5 is a drawing illustrating an exhaust gas emission purification device according to the prior art with a denitration catalyst provided on the upstream side of the turbocharger.

### EMBODIMENTS OF THE INVENTION

The objects of the present invention, which are to eliminate an insufficient temperature of an exhaust gas introduced into a denitration catalyst, and to eliminate a need for an evaporation tube which causes a loss of a flow path pressure, are achieved by means of an exhaust gas emission purification device provided in an exhaust system of an engine, the device comprising:
an exhaust chamber which collects an exhaust gas emitted from an exhaust port of the engine, and
a catalytic reactor, arranged serially within the exhaust chamber, which has a plurality of catalyst tubes with a denitration catalyst disposed therein for breaking down NOx in the exhaust gas by bringing the exhaust gas into contact with the denitration catalyst.

The device also comprises a nozzle capable of spraying an aqueous solution containing a reducing agent and a reducing agent precursor, or either one of these, into the exhaust gas before it reaches the catalytic reactor.

The following construction is particularly advantageous in a case where the above-described exhaust gas emission purification device according to the present invention is used in a diesel engine for a ship.

If used on a ship, there is no need to use a denitration catalyst at all times, because restrictions on NOx emissions differ, depending on the sea area through which the ship passes, so there are some sea areas where it is not necessary to use the denitration catalyst.

Accordingly, it is more advantageous for the above-described exhaust gas emission purification device according to the present invention to have a construction provided with an exhaust passage for guiding the exhaust gas emitted from the catalyst tubes to the upstream side of the turbine of the turbocharger, as well as a bypass passage which connects the exhaust chamber and the upstream side of the turbine, thus serving to bypass the catalyst tubes. It is also more advantageous to provide a valve for individually opening and closing the exhaust passage and the bypass passage.

With such a construction, it is possible to operate using a denitration catalyst (referred to below as an "SCR operation") by opening the valve of the exhaust passage, and closing the valve of the bypass passage, for example. Conversely, when the valve of the exhaust passage is closed and the valve of the bypass passage is opened, the denitration catalyst is not used in the operation (referred to below as a "bypass operation"), thus making it possible to switch between the SCR operation and the bypass operation, depending on the sea area through which the ship passes.

In diesel engines for ships, fuels are used such as light oil or heavy oil, which contain greater quantities of sulfur than gasoline, so sulfur compounds in the fuel readily form SOx in exhaust gas emissions. In a prior art gas emission purification device in which a denitration catalyst was provided downstream of a turbocharger, urea fed from the nozzle reacted with SOx to form intermediates such as ammonium sulfate ((NH₄)₂SO₄), ammonium hydrogen sulfate (NH₄HSO₄) and the like, because the temperature of the exhaust gas is low. When these intermediates are adsorbed onto the denitration catalyst, it caused a decrease in catalytic performance.

In the present invention, the risk of a decrease in catalytic performance due to adsorption of intermediates onto the catalyst is fundamentally mitigated, because the temperature of the exhaust gas in the exhaust manifold is high. However, if a construction is employed such that there is switching between the SCR operation and the bypass operation, as described above, then adsorption of intermediates readily occurs, because high-temperature exhaust gas does not pass through the inside of the catalyst tubes during the bypass operation, and relatively low-temperature exhaust gas containing SOx remains.

Accordingly, it is more advantageous for the exhaust gas emission purification device according to the present invention to be constructed so that an air intake passage is provided to connect an intake manifold and the outlet port side of the catalyst tubes, and so that a valve is provided to open and close the air intake passage.

In such a construction, air is introduced from the intake manifold to the outlet port side of the catalyst tubes by opening the valve of the air intake passage during the bypass operation, thereby reversing the flow of the relatively low-temperature exhaust gas containing SOx which remains in the catalyst tubes, and making it possible to replace it with new gas. Therefore, even in cases where there is switching between the SCR operation and the bypass operation, it is possible to reliably prevent the adsorption of intermediates.

### EXAMPLES

Various examples of the present invention are described in detail below, with reference being made to FIG. 1 to FIG. 3. In FIG. 1, Reference Numeral 1 is an exhaust gas emission purification device according to the present invention, equipped with a turbocharger 2, and used in a 4-cylinder diesel engine for a ship, for example. Inside an exhaust manifold 3 of the exhaust gas emission purification device 1 there is provided a catalytic reactor 8 in which are disposed in parallel a plurality of catalyst tubes 7 within which are placed a denitration catalyst on the inside of the tubular members, and the catalytic reactor is connected to an exhaust chamber 5 which collects exhaust gas emitted from exhaust connection pipes 4b which are connected to their respective exhaust ports 4a which are provided to each of the cylinder heads of an engine 4. In addition, nozzles 6 for spraying aqueous urea into the exhaust gas within the exhaust chamber 5 are provided inside the exhaust chamber 5. Reference Numeral 2b is a compressor of the turbocharger 2 which compresses air fed from an intake passage 10a, and Reference Numeral 11 is an intake manifold which distributes compressed air supplied by an intake passage 10 to intake ports 4c of the engine 4 via intake connection pipes 4d.

The nozzles 6, the catalyst tubes 7, and the catalytic reactor 8 are, for example, formed according to the following construction.

For example, the nozzles 6 are provided in a position upstream of the vicinity of the opening of the exhaust connection pipes 4b, so as to make it possible to directly spray aqueous urea into high-temperature exhaust gas immediately after it is emitted from the exhaust connection pipes 4b into the exhaust chamber 5. Additionally, a plurality of nozzles 6 are provided to each respective opening of the exhaust connection pipes 4b, so as to make it possible to evenly and uniformly spray aqueous urea into the exhaust gas in the exhaust chamber 5. In the example shown in FIG. 1, the nozzles 6 are provided in 4 places.

An aqueous solution must be supplied to the nozzles 6 to form a reducing agent, but there is a risk involved in storing aqueous ammonia inside a ship. Therefore, in this example, an aqueous solution of urea, for example, is stored as a reducing agent precursor in a tank 6a which is connected to the nozzles 6, and then, during operation, aqueous urea is sprayed from the nozzles 6 into the exhaust chamber 5, and the heat of the exhaust gas is used in hydrolyzing the urea, to form ammonia.

Inside a tubular body of a catalyst tube 7, there is provided a porous honeycomb core, for example, and an SCR catalyst is attached to or coats a cell wall thereof. Alternatively, an SCR catalyst itself may be placed inside a tubular body of a catalyst tube 7, in the form of a porous honeycomb core. The SCR catalyst may be any desired catalyst, such as a metal oxide-based catalyst such as alumina, zirconia, vanadia/titania, or the like, or a zeolite-based catalyst, and these catalysts may be used in combination.

The catalytic reactor 8 can be an integrated unit having a plurality of adjacent catalyst tubes 7 as described above, within a cage structure, for example. In the example shown in FIG. 1, the catalytic reactor 8 is disposed facing the openings of the exhaust connection pipes 4b within the exhaust manifold 3.

Exhaust gas containing a gasified reducing agent is introduced through an inlet port 7b of the catalyst tubes 7, and while it passes through the inside of the catalyst tubes 7, it comes into contact with the SCR catalyst, a reduction reaction occurs, and NOx are broken down into water and nitrogen. Exhaust gas from which NOx have been removed is discharged from the outlet ports 7c of the catalyst tubes 7, and introduced into an exhaust passage 9 upstream of a turbine 2a of the turbocharger 2.

In the present invention, a high-temperature exhaust gas inside the exhaust manifold 3 can be introduced into the catalyst tubes 7, but when the exhaust gas only passes through the inside, it takes time for the SCR catalyst to rise to a temperature suitable for a catalytic reaction, because the temperature of the SCR catalyst is low immediately after starting the engine. Accordingly, the SCR catalyst sometimes does not function sufficiently immediately after starting the engine.

In the exhaust gas emission purification device 1 of this example, a portion of the catalytic reactor 8 is linked to the exhaust chamber 5, so that exhaust gas discharged from the exhaust ports 4a to the exhaust chamber 5 will circulate around the outer periphery of the catalyst tubes 7. In detail, as shown in FIG, 2, the catalytic reactor 8 is linked to the exhaust chamber 5 in such a manner that portions of the inlet ports 7b and of the outlet ports 7c of the catalyst tubes 7 are sealed by walls 8a and 8b so that gas does not flow in immediately after it is discharged into the exhaust chamber 5, but the central portion 7a of the catalyst tubes 7 is open.

In such a configuration, the high-temperature exhaust gas discharged from the exhaust ports 4a flows around the periphery of the catalyst tubes 7 to preheat the catalyst tubes from the outside, thereby causing a more rapid rise in the temperature of the denitration catalyst formed from an SCR catalyst, for example, and provided within the catalyst tubes 7. Accordingly, in a configuration such as that described above, after starting the engine, it is possible to reduce the time required until the SCR catalyst begins to function. In FIG. 2, arrow A shows the flow of exhaust gas around the periphery of the catalyst tubes 7, and arrow B shows the flow of exhaust gas introduced from the inlet ports 7b, passing through the catalyst tubes 7, and discharged to the outlet ports 7c.

Following is a description of the construction other than the nozzles 6, the catalyst tubes 7, and the catalytic reactor 8. Reference Numeral 12 is a bypass passage connecting the exhaust chamber 5 to the upstream side of the turbine 2a, bypassing the catalyst tubes 7. A first valve 9a is provided in the exhaust passage 9, and a second valve 12a is provided in the bypass passage 12.

Accordingly, if, for example, the first valve 9a is opened and the second valve 12a is closed, the exhaust gas discharged into the exhaust chamber 5 passes through the inside of the catalytic tubes 7, thus enabling an SCR operation. On the other hand, if the first valve 9a is closed and the second valve 12a is opened, the exhaust gas discharged into the exhaust chamber 5 is discharged upstream of the turbine 2a without passing through the catalyst tubes 7, thus enabling a bypass operation. Use of such a structure makes it possible to switch between an SCR operation and a bypass operation, depending on the sea area through which the ship passes.

Reference Numeral 13 is an air intake passage which connects the intake manifold 11 with the outlet port 7c side of the catalyst tubes 7. The air intake passage 13 is provided with a third valve 13a which opens and closes this passage.

Accordingly, if the third valve 13a of the air intake passage 13 is opened during the bypass operation, air is introduced from the intake manifold 11 to the outlet port 7c side of the catalyst tubes 7, so that exhaust gas containing SOx remaining in the catalytic tubes 7 is pushed toward the outlet port 7c side of the catalyst tubes 7, and replaced with new gas. Therefore, it is possible to more reliably prevent the adsorption of intermediates onto the denitration catalyst, even if a construction is employed whereby the SCR operation and the bypass operation are switched.

Moreover, in the present example, in addition to having the nozzles 6 arranged in the exhaust chamber 5, there is also provided a diffusion chamber 14 for diffusing the gasified reducing agent into the exhaust gas. Though it is not shown in FIG. 1, static mixer may be provided in the diffusion chamber 14 to thoroughly mix the ammonia gas and the exhaust gas.

The present invention is not limited to the above-described examples, and the embodiment may, of course, be advantageously modified within the scope of the technical ideas recited in the claims.

For example, according to the example illustrated in FIG. 1, the nozzles 6 are respectively provided at positions upstream of the vicinity of the openings of the exhaust connection pipes 4b, but there is no limitation on the number or position of the nozzles which are provided. For example, as shown in FIG. 3, a single nozzle 6 may be provided in the diffusion chamber 14 disposed between the exhaust chamber 5 and the catalytic reactor 8. However, it is more advantageous for the nozzles 6 to be arranged at the positions shown in FIG. 1, in order to thoroughly mix the gasified reducing agent and the exhaust gas.

### EXPLANATION OF THE REFERENCE NUMERALS

- 1: Exhaust gas emission purification device
- 2: Turbocharger
- 2a: Turbine
- 3: Exhaust manifold
- 4: Engine
- 4a: Exhaust port
- 5: Exhaust chamber
- 6: Nozzle
- 7: Catalyst tube
- 7c: Outlet port
- 8: Catalytic reactor
- 11: Intake manifold
- 12: Bypass passage
- 13: Air intake passage
- 14: Diffusion chamber

## Claims

1. An exhaust gas emission purification device (1) comprising, within an exhaust manifold (3) of an engine equipped with a turbocharger (2):
an exhaust chamber (5) which collects an exhaust gas emitted from an exhaust port (4a) of the engine;
a catalytic reactor (8), arranged serially within the exhaust chamber (5), **characterized in that** the catalytic reactor (8) has a plurality of catalyst tubes (7) with a denitration catalyst disposed therein for breaking down NOx in the exhaust gas by bringing the exhaust gas into contact with the denitration catalyst, wherein the catalytic reactor (8) is an integrated unit having the plurality of adjacent catalyst tubes (7) within a cage structure; and
a nozzle (6) that sprays an aqueous solution containing a reducing agent and a reducing agent precursor, or either one of these, into the exhaust gas before it reaches the catalytic reactor, wherein
a portion of the catalytic reactor (8) is linked to the exhaust chamber (5), so that exhaust gas discharged from the exhaust port (4a) to the exhaust chamber (5) will circulate around the outer periphery of the catalyst tubes (7).

2. The exhaust gas emission purification device according to claim 1, further comprising: an exhaust passage (9) that guides the exhaust gas emitted from the catalyst tubes (7) to the upstream side of the turbine (2a) of the turbocharger (2); a bypass passage (12) which connects the exhaust chamber (5) and the upstream side of the turbine (2a), while bypassing the catalyst tubes (7); and a valve that individually opens and closes the exhaust passage (9) and the bypass passage (12).

3. The exhaust gas emission purification device (1) according to claim 2, further comprising an air intake passage that connects an intake manifold (11) and an outlet port (7c) side of the catalyst tubes (7), and a valve that opens and closes the air intake passage.

4. The exhaust gas emission purification device (1) according to claim 1, wherein the nozzle (6) is provided in the exhaust chamber (5), and the exhaust gas emission purification device (1) further comprises a diffusion chamber (14) provided between the exhaust chamber (5) and the catalytic reactor (8), in order to diffuse a gasified reducing agent in the exhaust gas.

## Patentansprüche

1. Vorrichtung zur Reinigung von Abgasemissionen (1), umfassend, innerhalb eines Abgaskrümmers (3) eines Motors, der mit einem Turbolader (2) ausgestattet ist:
eine Abgaskammer (5), die ein von einer Abgasöffnung (4a) des Motors emittiertes Abgas sammelt;
einen katalytischen Reaktor (8), der seriell innerhalb der Abgaskammer (5) angeordnet ist, **dadurch gekennzeichnet, dass** der katalytische Reaktor (8) eine Vielzahl von Katalysatorrohren (7) mit einem darin eingerichteten Denitrierungskatalysator zum Abbauen von NOx im Abgas durch Inkontaktbringen des Abgases mit dem Denitrierungskatalysator aufweist, wobei der katalytische Reaktor (8) eine integrierte Einheit ist, die die Vielzahl von benachbarten Katalysatorrohren (7) innerhalb einer Käfigstruktur aufweist; und
eine Düse (6), die eine wässrige Lösung, die ein Reduktionsmittel und eine Reduktionsmittelvorstufe enthält, oder eines dieser beiden, in das Abgas sprüht, bevor es den katalytischen Reaktor erreicht, wobei
ein Abschnitt des katalytischen Reaktors (8) an die Abgaskammer (5) gekoppelt ist, sodass Abgas, das von der Abgasöffnung (4a) zur Abgaskammer (5) abgelassen wird, um den äußeren Umfang der Katalysatorrohre (7) zirkuliert.

2. Vorrichtung zur Reinigung von Abgasemissionen nach Anspruch 1, weiter umfassend: einen Abgaskanal (9), der das von den Katalysatorrohren (7) emittierte Abgas zur stromaufwärtigen Seite der Turbine (2a) des Turboladers (2) führt; einen Bypasskanal (12), der die Abgaskammer (5) und die stromaufwärtige Seite der Turbine (2a) verbindet, während er die Katalysatorrohre (7) umgeht; und ein Ventil, das einzeln den Abgaskanal (9) und den Bypasskanal (12) öffnet und schließt.

3. Vorrichtung zur Reinigung von Abgasemissionen (1) nach Anspruch 2, weiter umfassend einen Lufteinlasskanal, der einen Einlasskrümmer (11) und eine Seite einer Auslassöffnung (7c) der Katalysatorrohre (7) verbindet, und ein Ventil, das den Lufteinlasskanal öffnet und schließt.

4. Vorrichtung zur Reinigung von Abgasemissionen (1) nach Anspruch 1, wobei die Düse (6) in der Abgaskammer (5) bereitgestellt ist, und die Vorrichtung zur Reinigung von Abgasemissionen (1) weiter eine Diffusionskammer (14) umfasst, die zwischen der Abgaskammer (5) und dem katalytischen Reaktor (8) bereitgestellt ist, um ein vergastes Reduktionsmittel in das Abgas zu diffundieren.

## Revendications

1. Dispositif d'épuration d'émissions de gaz d'échappement (1) comprenant, dans un collecteur d'échappement (3) d'un moteur équipé d'un turbocompresseur (2) :
une chambre d'échappement (5) qui recueille un gaz d'échappement émis par un orifice d'échappement (4a) du moteur ;
un réacteur catalytique (8), agencé en série avec la chambre d'échappement (5), **caractérisé en ce que** le réacteur catalytique (8) a une pluralité de tubes catalytiques (7) avec un catalyseur de dénitration qui y est disposé pour décomposer les NOx du gaz d'échappement en amenant le gaz d'échappement en contact avec le catalyseur de dénitration, dans lequel le réacteur catalytique (8) est une unité intégrée ayant la pluralité de tubes catalytiques adjacents (7) dans une structure de cage ; et
une buse (6) qui pulvérise une solution aqueuse contenant un agent réducteur et un précurseur d'agent réducteur, ou l'un ou l'autre d'entre eux, dans le gaz d'échappement avant qu'il atteigne le réacteur catalytique, dans lequel
une partie du réacteur catalytique (8) est reliée à la chambre d'échappement (5), de sorte que le gaz d'échappement déchargé de l'orifice d'échappement (4a) à la chambre d'échappement (5) circule autour de la périphérie externe des tubes catalytiques (7).

2. Dispositif d'épuration d'émissions de gaz d'échappement selon la revendication 1, comprenant en outre un passage d'échappement (9) qui guide le gaz d'échappement émis par les tubes catalytiques (7) vers le côté amont de la turbine (2a) du turbocompresseur (2) ; un passage de dérivation (12) qui raccorde la chambre d'échappement (5) et le côté amont de la turbine (2a), tout en dérivant les tubes catalytiques (7) ; et une soupape qui ouvre et ferme individuellement le passage d'échappement (9) et le passage de dérivation (12).

3. Dispositif d'épuration d'émissions de gaz d'échappement (1) selon la revendication 2, comprenant en outre un passage d'admission d'air qui raccorde un collecteur d'admission (11) et un côté d'orifice de sortie (7c) des tubes catalytiques (7) ainsi qu'une soupape qui ouvre et ferme le passage d'admission d'air.

4. Dispositif d'épuration d'émissions de gaz d'échappement (1) selon la revendication 1, dans lequel la buse (6) est aménagée dans la chambre d'échappement (5) et le dispositif d'épuration d'émissions de gaz d'échappement (1) comprend en outre une chambre de diffusion (14) aménagée entre la chambre d'échappement (5) et le réacteur catalytique (8) afin de diffuser un agent réducteur gazéifié dans le gaz d'échappement.
